# EUROPEAN PATENT SPECIFICATION

(11) **EP 3 080 906 B1**
(45) Date of publication and mention of the grant of the patent: **03.06.2020**
(21) Application number: 14827517.5
(22) Date of filing: 16.12.2014
(51) Int. Cl.: H02P 25/092, H02P 1/46, H02P 25/08, H02P 1/16

(54) **SWITCHED RELUCTANCE MOTOR STARTING METHODS**
VERFAHREN ZUM ANLAUF EINES GESCHALTETEN RELUKTANZMOTORS
MÉTHODE DE MISE EN MARCHE D'UN MOTEUR À RELUCTANCE VARIABLE

(30) Priority: 27.12.2013 GB 201323080
(43) Date of publication of application: 19.10.2016
(73) Proprietor: Valeo Air Management UK Limited, Redditch, Worcestershire B98 0DZ (GB)
(72) Inventor: BOUALLAGA, Kamel, Basildon Essex SS14 3WN (GB); DUPUIS, Dominique, Basildon Essex SS14 3WN (GB)
(74) Representative: Abel & Imray
(86) International application number: PCT/GB2014/053711
(87) International publication number: WO 2015/097441

(56) References cited:
- GB-A- 2 319 908

## Description

### Field of the invention

The present invention relates to switched reluctance motors and in particular to methods of starting such a motor.

### Background of the Invention

The UK Patent Application GB 2 319 908 A discloses a method of starting a switched reluctance motor having a plurality of pairs of stator coils, each pair comprising coils that are on opposite sides of the rotational axis of the motor, the method comprising:
energising, at the same time, first and second pairs of the stator coils,
waiting for a period for rotary movement of the rotor to reduce and then
turning off a first of the two pairs of coils, while leaving the second pair energised so that the rotor is caused to rotate by the second pair of coils.

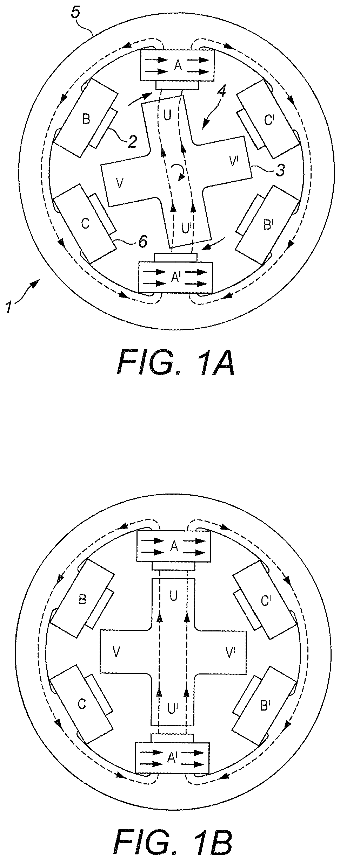

A typical switched reluctance motor is shown in Figures 1A, 1B and 2 to 4. This example has a combination (which is frequent) of six, preferably evenly, spaced poles 2 on the stator 1 and four, preferably evenly, spaced poles 3 on the rotor 4. In this example, the poles of the stator project inwardly from a stator ring 5, the ring providing a path of low reluctance material between the stator poles.

The rotor is formed of a stack of cross-shaped laminations, also of low reluctance material. Therefore each rotor pole is connected to the diametrically opposite rotor pole by a low reluctance path, for reasons which will become apparent. So, as marked, pole U is connected by a low reluctance path to pole U' and pole V to pole V'.

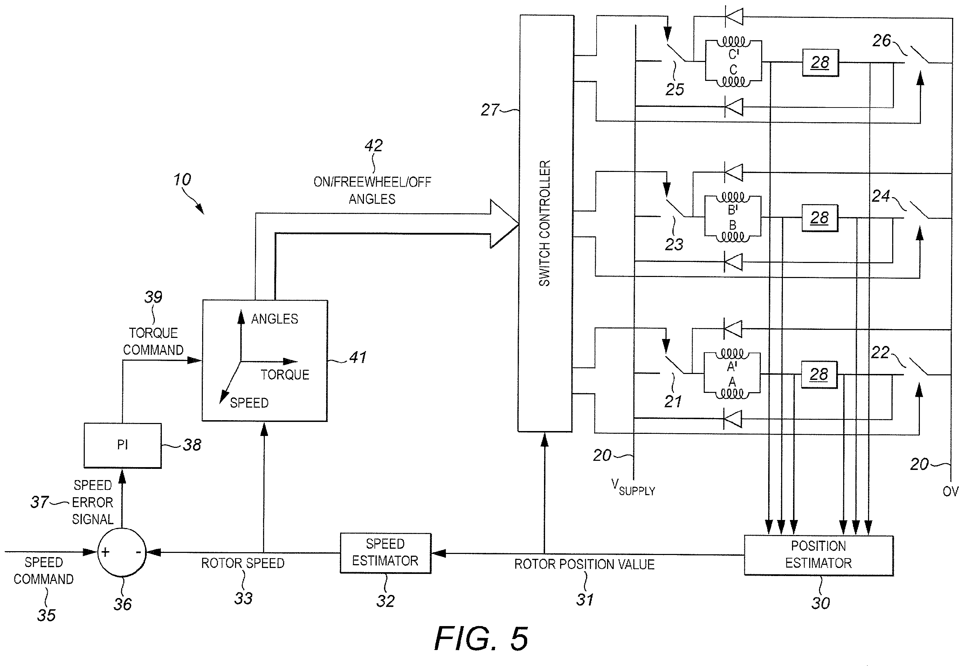

Each pole of the stator is wound with a coil 6 and the coils are arranged in pairs, each pair comprising the coils at opposite ends of a respective diameter through the rotational axis of the motor. In this case therefore the pairs are coils AA', BB' and CC', as marked. The coils of a pair are energised at the same time, with current from a motor control circuit 10 (Figure 5), and in a sense such that one provides a magnetic field towards the rotational axis and one away from the axis. In the Figures the arrows on the coils represent the direction of the current in the coil above the plane of the paper and the dashed arrows represent the magnetic flux. Together the magnetic flux lines produced by the energised coils and their respective poles are arranged generally along the diameter between them and then follow the stator ring (in both circumferential directions) to the other energised coil of the pair.

The rotor modifies the distribution of magnetic field lines in the space between the energised pair of stator poles. Positions of the rotor in which a pair of diametrically opposite poles of the rotor are aligned along the diameter between the energised pair of stator poles are positions of the rotor that have minimum reluctance for the magnetic circuit that comprises the rotor between the aligned rotor poles, the energised stator poles and the stator ring. The example of rotor poles U and U' being aligned between stator poles A and A' is shown in Figure 1B. Such a position is therefore a position of minimum magnetic energy. In a non-aligned position, e.g. as in Figure 1A the magnetic flux still flows along the low reluctance path between the poles of rotor and so the flux is diverted from the diameter between the energised poles of the stator, with the result that it has to cross larger air gaps between the poles of the rotor and stator, increasing the reluctance of the magnetic circuit and the magnetic energy. So if the rotor is not aligned there is a torque on it drawing it towards the aligned position.

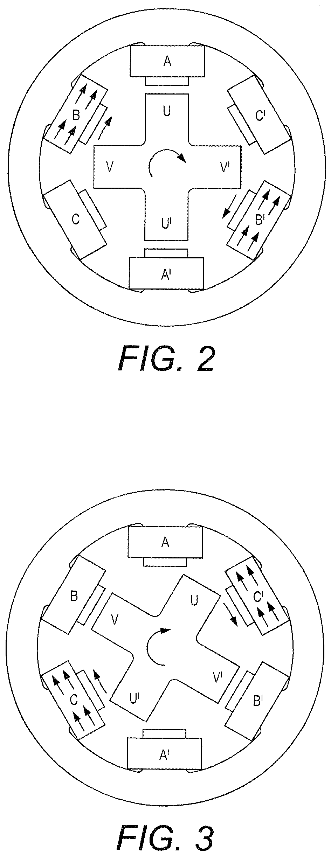

At operational rotation speeds the motor is driven by energising pairs of stator coils in turn to draw the poles of the rotor forward in the direction of rotation. So when, for example, the rotor is in the position of Figure 1A and the rotor is rotating clockwise, so that rotor poles U and U' are approaching stator poles A and A', the coils of A and A' are energised so that U and U' are drawn towards A and A'. When the position of Figure 1B is reached in which U and U' are aligned with coils A and A', A and A' are turned off (Figure 2) so that the rotor can continue to rotate without being slowed or drawn back to A and A'. At this point also rotor poles V and V' are approaching stator poles of coils B and B' so B and B' are energised (Figure 2) to draw stator poles V and V' onwards in the clockwise direction towards B and B'.

When the position of Figure 3 is reached in which V and V' are aligned with coils B and B', B and B' are turned off so that the rotor can continue to rotate without being slowed or drawn back to B and B'. At this point rotor poles U' and U are approaching the stator poles of coils C and C' so coils C and C' are energised to draw rotor poles U' and U onwards in the clockwise direction towards C and C'.

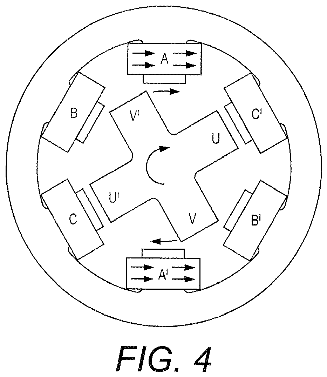

When the position of Figure 4 is reached in which U' and U are aligned with C and C' the coils C and C' are turned off so that the rotor can continue to rotate without being slowed or drawn back to C and C'. At this point rotor poles V' and V are approaching the stator poles of A and A' so the coils A and A' are energised to draw stator poles V' and V onwards in the clockwise direction towards A and A'.

When V' and V reach A and A' the rotor has turned 90°, so, since the rotor has four fold rotational symmetry it is in effect in the same position as Figure 2 and so the cycle of energising coils B and B' then C and C' and then A and A' is repeated to advance the rotor the next 90°, and so on.

As is known in the art the coils are switched off and on at particular angles of rotation of the rotor, for example in response to sensing signals generated by the coils as they are both driven by the currents and their inductance changes as the rotor poles pass by them. A first known motor control circuit 10 is shown in Figure 5. This comprises the stator coil pairs connected in parallel across a DC power supply 20. Coils A and A', connected in parallel with each other, are energised by closing switches 21 and 22, and similarly coils B and B' by switches 23 and 24 and coils C and C' by switches 25 and 26. These switches are operated by the control circuit 10, which closes the switches when the coils are to be energised. Having the coils A and A' operated by a common pair of switches (similarly each coil pair B and B', and C and C', having its own pair of common switches) is sufficient to provide the patterns of coil energisation described above. The switches 21 to 26 are provided, for example, as FET or IGBT transistors. A measure of the current is used by the motor control circuit 10 to determine the position of the rotor and in turn to determine the timings of the operation of the switches 21 to 26.

In more detail, the control circuit 10 of Figure 5 senses signals generated by the coils as they are both driven by their currents and their inductance changes as the rotor poles pass by them. This inductance comprises the stator coil pairs connected in parallel across DC power supply 20. The voltage of this supply depends on the application and might be 12V, 24V, 48V or 300V, for example. Coils A and A', connected in parallel with each other, are energised by closing switches 21 and 22, and similarly coils B and B' by switches 23 and 24, and coils C and C' by switches 25 and 26. These switches are operated by a switch control unit 27, which closes the switches when the coils are to be energised. The current in each coil pair is sensed by a resistor 28 connected in series with it to provide a resulting voltage signal that is proportional to the current, which is used to determine the rotor positions, which are used in turn to determine the timings of the operation of the switches 21 and 22, 23 and 24, and 25 and 26.

The motor control circuit 10 processes the signals from the coils in a number of stages, forming a control loop. A position estimator 30 receives the signals indicative of the coil currents and continuously calculates from them the position of the rotor and outputs a rotor position signal 31. The calculation is performed by a microcontroller. A speed estimator 32 differentiates this signal with respect to time, to provide a rotor speed signal 33. The control loop is designed to control the speed of the motor to be as set by an input signal, speed command signal 35, and the difference between the speed command signal and the rotor speed signal is formed by a subtractor 36 to form a speed error signal 37. A loop controller 38, for example in this case a proportional-integral controller, uses this signal to adjust a torque command 39 for the motor. The relationship between the torque applied by a motor to its steady state speed is generally monotonically increasing. So the controller 38 increases the torque commanded if the speed error indicates that the motor is running too slower than required and reduces torque commanded if the motor is running faster than commanded. The controller 38 also filters the signals circulating round the control loop in order to smooth the response of the loop.

The motor 1 is of course not controlled directly by a torque command and the torque command 39 is converted to control angles 42 for the switches of the motor. These angles are the angles of the rotor at which the switches of the motor operated, in particular the angles at which a coil pair is turned on, the angle at which it is allowed to "freewheel", and the angle at which it is turned off.

To turn the pair of coils on both its associated switches are turned on (for coils AA' switches 21 and 22). In the freewheel mode the switch (e.g. 21) connecting the coils to the positive supply is opened but the current continues to circulate through a diode and at the off angle both switches are opened and the current in the coil passes through the other marked diode to ground, dissipating over a short period after the switches are opened. (Alternatively, for the freewheel mode the switch connecting the coils to the negative supply may be opened instead, with the current continuing to flow through the coils of the pair and the other marked diode. Which of the two switches is open in the freewheel mode can be alternated in order share balance the power dissipated by the switches between them.)

The conversion of the torque command signal to these angles is performed by a lookup table 41. The angles needed to provide the torque desired are dependent on the speed of the rotor, so the rotor speed signal 33 is also provided to the lookup table 41, to provide the angles for that torque and speed. These angles are determined empirically while driving the motor while connected to its desired load.

The angles 42 produced by the lookup table 41 are passed to the switch control unit 27, which operates the switches at the angles 42 accordingly when those angles match the rotor position signal 31. In more detail, the angles 42 supplied are the same for each coil pair and are relative to the angular position of the coil pair. The switch controller 27 keeps track of which coil pair is to be operated next and uses the rotor position value 31 modulo 30° for the comparison with the angles 42.

Circuit blocks 30, 32, 36, 38, 41 and 27 are preferably implemented by the microcontroller.

Other forms of control circuit are known. One similar circuit example uses Hall Effect sensors rather than the coil currents to note when the rotor passes various positions.

As is also known in the art, other combinations of stator and rotor pole numbers are possible for the motor. These have different cycles of energisation of the coils in order to keep the torque on the rotor in the forward direction. A common relationship between the numbers of poles is to have two more stator poles than rotor poles and to have both even in number. The choice of the number of poles usually takes into account the operating speed of the motor, the operating power, the acceptable level of torque ripple (variation in torque supplied by the motor with angle of the rotor), and the circuitry required.

The switching cycles described above are used when the rotor is rotating at operational speeds. A known method of starting a rotor of a switched reluctance motor, using the example of a 6 pole stator and 4 pole rotor described above, is given below.

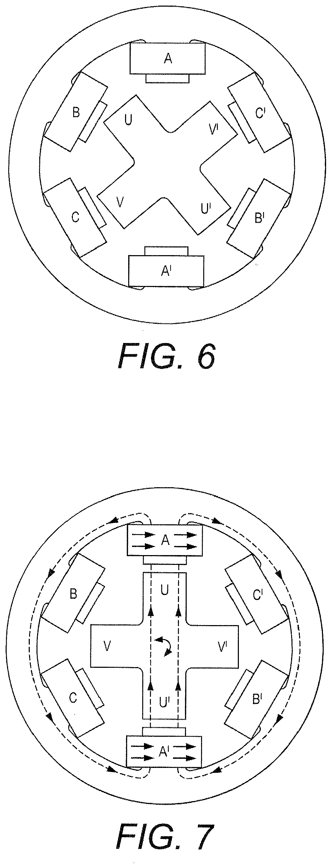

To begin with the motor is in an arbitrary stationary position, for example as in Figure 6. In this position the motor has been off and so all the coils are off.

An initial desired stationary position for the motor is established, in a second step, by energising just one pair of stator coils, e.g. A and A', which are then held on for some time (Figure 7). These attract the nearest pair of poles of the rotor, e.g. U and U'. Because the coils A and A' are held on and because the rotor, and whatever it is the rotor is attached to (for example the compressor wheel of a supercharger), gain angular momentum as poles U and U' are attracted to A and A' the poles U and U' overshoot A and A' and oscillate about the position of A and A', but losing energy to friction and eventually settling to rest with U and U' aligned on the diameter of A and A'.

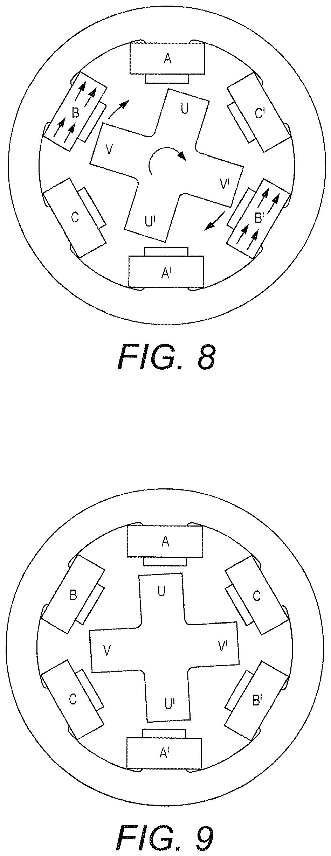

In a third step (Figure 8), the coils of A and A' are turned off the coils of B and B' or C and C' are turned on, depending on the desired direction of rotation. In the example above of clockwise rotation coils Band B' are used as shown in Figure 8.

Once the rotor poles V and V' have reached B and B' those coils are turned off (a fourth step) and the rotor has been given a known speed of rotation.

The known starting method described above has, however, the disadvantage that the duration of the first step be can be unacceptably long. It can also provide a large current demand for the coils.

### Summary

The invention is defined in the independent claims 1 and 9.

### Aspects of the Invention

In a first aspect of the invention there is provided a method of starting a switched reluctance motor having a plurality of pairs of stator coils, each pair comprising coils that are on opposite sides of the rotational axis of the motor, the method comprising:
energising, at the same time, first and second pairs of the stator coils,
waiting for a period for rotary movement of the rotor to reduce, and then
turning off a first of the two pairs of coils, while leaving the second pair energised so that the rotor is caused to rotate by the second pair of coils.

The use of two pairs of coils to settle the rotor in its starting position has the advantage that it is quicker since the rotor will settle more quickly because the angular window in the magnetic fields provided by energising two pairs of coils is narrower. Another advantage is that it balances the current load between the two pairs of coils during the settling step. This reduces deterioration caused on a single coil pair after numerous starting operations, drawing a large current. That helps to keep the coil pairs operating in a balanced manner.

The two pairs of stator coils may be nearest neighbours. For each pair of stator coils of the plurality the coils of pair may be diametrically opposite on the stator.

The method further comprise a step of turning off the second pair of coils after a particular period of time. The particular period of time may be a predetermined period for the rotor to reach a particular position.

The method may comprise a step of turning off the second pair of stator coils when a predetermined rotor rotational speed has been reached.

The method further comprise the step of turning on a pair of the stator coils to further accelerate the motor. The method further comprise a step of repeatedly turning on and off a particular pair of the stator coils to further accelerate the motor, while keeping the other stator coils turned off. The pair of stator coils may be repeatedly turned on and off at a constant frequency (while keeping the other stator coil turned off). The timing at which the pair of stator coils are turned on and off is preferably independent of the desired torque and/or speed (torque/speed set-point). For example the timings are preferably not obtained from a look-up table. The timing may be constant. The timings may be in response to an output from a position sensor. For example the pair of stator coils is preferably turned on when the rotor is in a first position (preferably measured by the position sensor). The stator coils are preferably turned off when the rotor is in a second position (preferably measured by the position sensor). Such an arrangement is beneficial because it provides a simple way of accelerating the motor, without requiring a calculation, or other form of selection, of the timings.

The method may comprise a further step of driving the motor using a plurality of pairs of its stator coils, each pair with its own phase. The further step of driving the motor is after the step of repeatedly turning on and off a particularly pair of stator coils, when keeping the other stator coils off. The timings during the further step, are preferably dependent on the desired torque (torque set-point). The timings when driving the motor may be from a look-up table.

The method is applied to a switched reluctance motor that is coupled to drive the compressor wheel of a supercharger.

The first aspect of the invention also provides a control circuit for a switched reluctance motor comprising:
switches for connecting stator coils of the motor to a power supply, and
a start controller connected to operate the switches to perform the steps of the method.

The first aspect of the invention further provides apparatus comprising:
a switched reluctance motor, comprising a rotor and comprising stator coils,
the control circuit connected to the stator coils of the motor,
a supercharger having a compressor wheel coupled to the rotor of the motor to be driven thereby.

In a second aspect not claimed herein, there is provided a method of accelerating the rotor of a switched reluctance motor, having a plurality of pairs of stator coils, each pair comprising coils that are on opposite sides of the rotational axis of the motor, the method comprising:
repeatedly turning on and off one or more particular pairs of stator coils to accelerate the motor, while keeping the other stator coils turned off, a first coil of each pair being turned on and off at the same time as a second other coil of the pair.

The acceleration according to the second aspect is particularly advantageous when the normal operation of the motor with all the coils is highly controlled using for example the look up table 41. These provide detailed values for the operational range of motor speeds. However for acceleration to those operational speeds, optimisation of torque, efficiency etc. is not needed and so the simple method of the invention may be used without having to engineer those details.

The stator coils repeatedly turned on and off at the same time, while keeping the other stator coils turned off, may be a single pair of stator coils.

The method may further comprise, prior to the step of repeatedly turning on and off at the same time one or more particular pairs of stator coils, providing the rotor with a predetermined speed.

The method may further comprise, prior to the step of repeatedly turning on and off at the same time one or more particular pairs of stator coils, the steps of:
energising, at the same time, first and second pairs of the stator coils,
waiting for a period for rotary movement of the rotor to reduce, and then
turning off a first of the two pairs of coils, while leaving the second pair energised so that the rotor is caused to rotate by the second pair of coils.

The first and second pairs of stator coils may be nearest neighbours.

The method may further comprise, prior to the step of repeatedly turning on and off at the same time one or more particular pairs of stator coils:
energising, a first, single pair of the stator coils,
waiting for a period for rotary movement of the rotor to reduce, and then
turning off the first pair of coils, and energising a second different pair of the stator coils so that the rotor is caused to rotate by the second pair of coils.

The first and second pairs of stator coils may be nearest neighbours.

For each pair of stator coils energised the coils of the pair may be diametrically opposite on the stator.

The second aspect of the invention also provides a control circuit for a switched reluctance motor comprising:
switches for connecting stator coils of the motor to a power supply, and
a start controller connected to operate the switches to perform the steps of the method of any one of claims 13 to 19.

The second aspect of the invention also provides apparatus comprising:
a switched reluctance motor, comprising a rotor and comprising stator coils,
the control circuit connected to the stator coils of the motor,
a supercharger having a compressor wheel coupled to the rotor of the motor to be driven thereby.

The first and second aspects may be used together. It will be appreciated that features described with reference to one aspect are equally applicable to another aspect, or vice versa.

### Brief Description of the Drawings

Examples of the invention will now be described with reference to the accompanying drawings, of which:
FIGURES 1-4 show consecutive stages of rotation of the rotor, or phases, in the operation of a known switched reluctance at operational speeds,
FIGURE 5 is a block circuit diagram of a control circuit for the motor of Figure 1 etc.,
FIGURES 6-8 show stages of rotation in a known procedure for starting a switched reluctance motor,
FIGURES 9-11 show stages of rotation in an exemplary procedure for starting a switched reluctance motor in accordance with the invention,
FIGURE 12 is a flow diagram of the exemplary procedure of the invention, and
FIGURE 13 is a block circuit diagram of a motor control circuit in accordance with the present invention.

### Examples

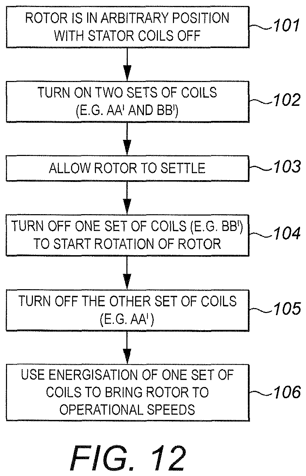

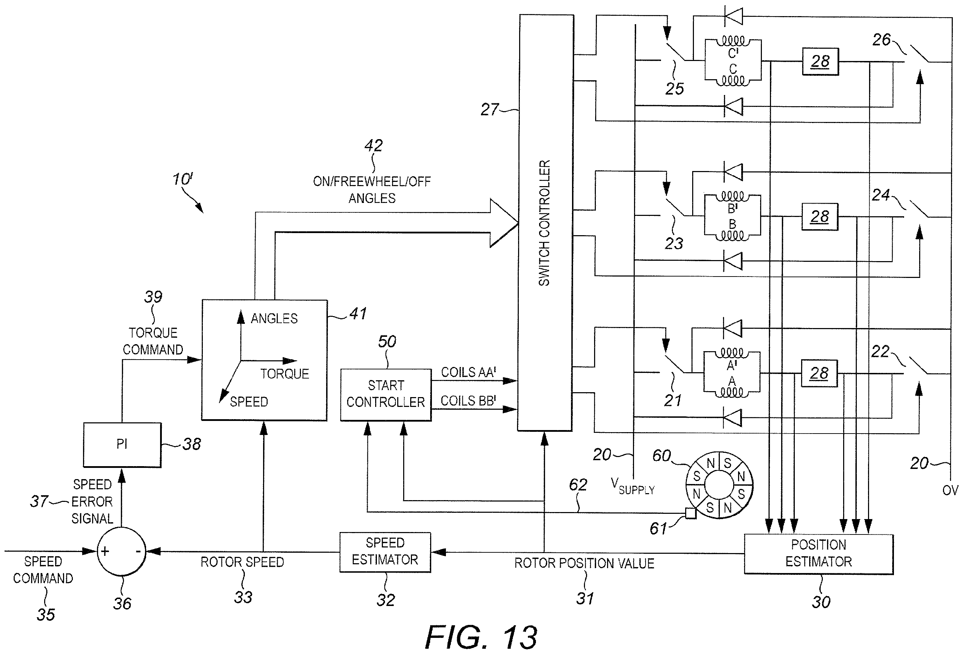

An exemplary method of starting a switched reluctance motor is shown in the flow diagram Figure 12 and illustrated in Figures 9 to 11 which show stages of rotation of a switched reluctance motor. The motor in this example is similar to that of the Figures 1 to 8 having six stator poles and four rotor poles, which are similarly marked ABCA'B'C' and UVU'V'. (ABCA'B'C' denote equally the poles and their respective coils.) It is operated with a motor control circuit similar to that of Figure 5 except the control circuit 10'(Figure 13) is arranged to control the switches 21 to 26 to turn the coils of the motor on and off as described in this example. A start controller 50 (preferably implemented with an additional program in the microcontroller) is provided to do this.

The rotor begins in an arbitrary position, at which the rotor may be stationary or slowly moving, as shown in Figure 9 (step 101, in Figure 12) with all the coils off. In one such position, rotor pole U is between stator poles A and B and its opposite rotor pole U' is between stator poles A' and B'.

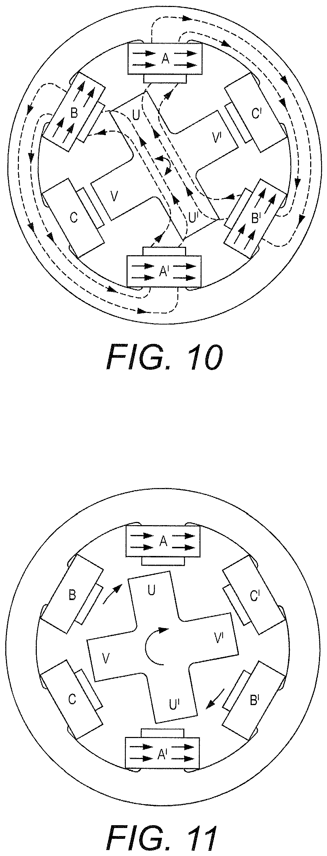

In a second step, as shown in Figure 10 (step 102 in Figure 12), two pairs of coils, A and A', and B and B' are energised. The start controller 50 issues direct instructions to the switch controller to do this. This rotates the rotor to the minimum energy position where a rotor pole, in this case U, is between A and B, and its opposite pole, in this case U', is between A' and B'. With other starting positions one rotor pole will come to rest between the coils of the two energised pairs.

The rotor may oscillate about the low energy position for a while but will be damped and come to rest and a third step (Step 103) of the exemplary method is to wait for a time for rotary movement of the rotor to reduce (which time the start controller monitors).

After waiting, in a fourth step (step 104), one of the energised pairs of coils, A and A', or B and B', is turned off (by the start controller), depending on the desired direction of rotation for the rotor. As shown in Figure 11 coils B and B' are turned off and so rotor poles U and U' are attracted to stator poles A and A' and so the rotor turns clockwise. In a fifth step (Step 105), after a predetermined period coils AA' are turned off and the rotor then has a predetermined rotational speed. (Again the start controller monitors the periods and operates the coils.)

The rotor is now rotating at a known speed and can be driven using all the coil phases as normal, with the first being timed in accordance with the known speed.

However, in this example the motor is preferably brought up to operational speeds via an intermediate stage by energising the coils according to the following exemplary methods. Just one pair of coils is used for these, for example coils A and A'. These are energised for a short period each time a rotor pole U,V,U',V' approaches coil. So that is a total of four times per rotation.

In a first exemplary method the motor is provided with a position sensor for the purpose. This comprises a magnetic indicator ring 60 mounted to rotate with the rotor, being fixed on the same shaft. This has eight alternating domains of alternate north and south magnetisation. A Hall Effect sensor 61 is positioned close to the ring to detect the magnetisation changing from north to south (which is distinct for the sensor 61 from a change from south to north). These north to south boundaries, of which there are four, are positioned to pass the Hall Effect sensor 61 when each rotor pole approaches the coil A and the sensor signals 62 the start controller 50 the timings of each occurrence of that. The start controller then energises coils A and A' for a period from that time so that the rotor is accelerated towards coils A and A'.

The Hall Effect sensor is provided as the positions estimator 30 may not be reliable at lower speeds.

The timing of the energisation periods for coil pair AA' is however predetermined. The timing of the first is predetermined by the third 103 and fourth 104 steps noted above which give the rotor a defined rotational speed, which can be measured and in a second exemplary method are provided to the motor control circuit during manufacture. The timing needed for each subsequent energisation is predetermined by the periods of energisation of coils AA' (in addition to the initial speed) and those timings are similarly provided to the motor control circuit during manufacture. (Preferably, these timings are preprogramed into the start controller 50, which operates coils at those times.) These timings are used instead of those provided by the Hall Effect sensor to energise the coils AA'. This method obviates the need for the Hall Effect sensor, but on the other hand errors in the predetermined timings measured mean that it will only be effective for a certain number of rotations.

For both these exemplary intermediate acceleration methods the coils AA' are preferably energised for a set angular period of rotation. However as this method is only to start the motor the angles need not be precisely determined with, for example, efficiency in mind, and so the more complex control loop involving setting the switch angles in terms of rotor speed and torque used during normal operation are not used. Therefore the switch angles used neither have to be determined with precision, nor stored in lookup table 41, and simple constant angles are preferably used.

Above a certain rotation speed, namely that above which lookup table 41 has data, the sensing of the angular position of the rotor from signals generated by the coils by the resistors 28 and the position estimator 30 is used to control when the coils are switched on, for example for the operational speed of the method of Figures 2 to 4.

These exemplary methods of bringing the rotor up to operational speeds may also be used where the initial rotation is given by switching from one pair of energised coils to another as is done the known starting method of Figure 6 to 8.

Some further points to note about the exemplary method of Figures 9 to 11 and 12 are as follows.

The example motor of Figures 9 to 11 has a high degree of rotational symmetry and the two pairs of coils in step 102 (Figure 10) are energised to the same degree. This means that the minimum energy position is equidistant between A and B. The invention is not limited to that however. If the coils are not the same or are not energised to the same degree, for some reason, the minimum energy position may not be equidistant from the two stator poles. The rotor may be started from there nonetheless.

The two pairs of coils energised are also, in the example, nearest neighbours. In motors having larger numbers of poles that is preferred, since using coils further apart defines a wider window into which the rotor is settled, but that is not excluded from the invention.

In the third step 103, the rotor was said above to be brought to a stationary position before it is accelerated by the fourth step (step 104). However, the rotor need not be absolutely stationary. If the rotor is still moving a little when the fourth step is commenced there will be an uncertainty in the initial speed of the rotor produced, but this may well be tolerable in the subsequent stage of bringing the rotor up to operational speeds with one pair of coils (or indeed of beginning straight away the normal cycling of the coils). This means that the time the method waits (step 103) before executing step 104 can be reduced, if needed.

On the other hand friction in the rotor mount, or friction from the item to which the rotor is connected (for example a compressor wheel in a supercharger), can cause the rotor to stop a little way from the exact position of minimum magnetic energy, but again this may produce an uncertainty in the initial rotor speed that is tolerable.

In the intermediate stage of acceleration more than one pair of coils could be used to the acceleration but one pair is preferred for simplicity, and in any event for simplicity this should be less than all of the coils of the stator. If more than one coil pair is used then preferably the same constant switch angles are used for each.

Also the example described the intermediate stage of acceleration being used with the initial acceleration method of Figure 9 to 11, but it can be used with other methods, for example, that of Figures 6 to 8.

Note finally that it is usually generally preferred in such motors for reasons of balance of torque to energise coils in pairs that are diametrically opposite to each other.

## Claims

1. A method of starting a switched reluctance motor that is coupled to drive the compressor wheel of a supercharger, the switched reluctance motor having a plurality of pairs of stator coils (6), each pair comprising coils (6) that are on opposite sides of the rotational axis of the motor, the method comprising:
energising, at the same time, first and second pairs of the stator coils (6),
waiting for a period for rotary movement of the rotor (4) to reduce, and than
turning off a first of the two pairs of coils (6), while leaving the second pair energised so that the rotor (4) is caused to rotate by the second pair of coils (6),
**characterised in that**
the method further comprises the step of
repeatedly turning on and off a particular pair of the stator coils (6) to further accelerate the motor, while keeping the other stator coils (6) turned off.

2. A method as claimed in claim 1 wherein the two pairs of stator coils (6) are nearest neighbours.

3. A method as claimed in any of claims 1 or 2 wherein for each pair of stator coils (6) of the plurality the coils (6) of pair are diametrically opposite on the stator (1).

4. A method as claimed in any one of claims 1 to 3 wherein the method further comprises a step of turning off the second pair of coils (6) after a particular period of time.

5. A method as claimed in claim 4 wherein the particular period of time is a predetermined period for the rotor (4) to reach a particular position.

6. A method as claimed in any preceding claim wherein the method comprises a step of turning off the second pair of stator coils (6) when a predetermined rotor (4) rotational speed has been reached.

7. A method as claimed in any preceding claim wherein the method further comprises the step of turning on a pair of the stator coils (6) to further accelerate the motor.

8. A method as claimed in claim 7 wherein the method comprises a further step of driving the motor using a plurality of pairs of its stator coils (6), each pair with its own phase.

9. A control circuit for a switched reluctance motor, the control circuit comprising:
Switches (21, 22, 23, 24, 25, 26) for connecting stator coils (6) of the motor to a power supply, and
a start controller (50) connected to operate the switches (21, 22, 23, 24, 25, 26) to perform the steps of the method of any one of claims 1 to 8.

10. Apparatus comprising:
a switched reluctance motor, comprising a rotor (4) and comprising stator coils (6),
a control circuit as claimed in claim 9 connected as claimed to the stator coils (6) of the motor,
a supercharger having a compressor wheel coupled to the rotor (4) of the motor to be driven thereby.

11. A method as in any one of claims 1 to 8 wherein for each pair of stator coils (6) energised the coils (6) of the pair are diametrically opposite on the stator (1).

## Patentansprüche

1. Verfahren zum Starten eines geschalteten Reluktanzmotors, der gekoppelt ist, um das Verdichterrad eines Laders anzutreiben, wobei der geschaltete Reluktanzmotor eine Mehrzahl von Paaren von Statorspulen (6) aufweist, jedes Paar umfassend Spulen (6), die sich auf gegenüberliegenden Seiten der Drehachse des Motors befinden, das Verfahren umfassend:
gleichzeitiges Erregen eines ersten und zweiten Paars der Statorspulen (6),
Warten während einer Zeitspanne, bis sich die Drehbewegung des Rotors (4) verringert, und dann Ausschalten eines ersten der zwei Paare von Spulen (6), während das zweite Paar erregt gelassen wird, so dass der Rotor (4) durch das zweite Paar von Spulen (6) veranlasst wird, sich zu drehen,
**dadurch gekennzeichnet, dass** das Verfahren ferner den Schritt des wiederholten Ein- und Ausschaltens eines bestimmten Paars der Statorspulen (6), um den Motor weiter zu beschleunigen, während die anderen Statorspulen (6) ausgeschaltet gelassen werden, umfasst.

2. Verfahren nach Anspruch 1, wobei die zwei Paare von Statorspulen (6) nächste Nachbarn sind.

3. Verfahren nach einem der Ansprüche 1 oder 2, wobei für jedes Paar von Statorspulen (6) der Mehrzahl die Paarspulen (6) auf dem Stator (1) diametral entgegengesetzt sind.

4. Verfahren nach einem der Ansprüche 1 bis 3, wobei das Verfahren ferner einen Schritt des Ausschaltens des zweiten Paars von Spulen (6) nach einer bestimmten Zeitspanne umfasst.

5. Verfahren nach Anspruch 4, wobei die bestimmte Zeitspanne eine vorbestimmte Zeitspanne für den Rotor (4) ist, um eine bestimmte Position zu erreichen.

6. Verfahren nach einem der vorhergehenden Ansprüche, wobei das Verfahren einen Schritt des Ausschaltens des zweiten Paars von Statorspulen (6), wenn eine vorbestimmte Drehzahl des Rotors (4) erreicht wurde, umfasst.

7. Verfahren nach einem der vorhergehenden Ansprüche, wobei das Verfahren ferner einen Schritt des Einschaltens eines Paars der Statorspulen (6), um den Motor weiter zu beschleunigen, umfasst.

8. Verfahren nach Anspruch 7, wobei das Verfahren einen weiteren Schritt des Antreibens des Motors mithilfe einer Mehrzahl von Paaren von dessen Statorspulen (6) umfasst, wobei jedes Paar seine eigene Phase aufweist.

9. Steuerungsschaltung für einen geschalteten Reluktanzmotor, die Steuerungsschaltung umfassend:
Schalter (21, 22, 23, 24, 25, 26) zur Verbindung von Statorspulen (6) des Motors mit einer Stromversorgung, und
eine Startsteuerung (50), die verbunden ist, um die Schalter (21, 22, 23, 24, 25, 26) zu betätigen, um die Schritte des Verfahrens nach einem der Ansprüche 1 bis 8 durchzuführen.

10. Vorrichtung, umfassend:
einen geschalteten Reluktanzmotor, umfassend einen Rotor (4) und umfassend Statorspulen (6),
eine Steuerungsschaltung nach Anspruch 9, die wie beansprucht mit den Statorspulen (6) des Motors verbunden ist,
einen Lader mit einem Verdichterrad, das mit dem Rotor (4) des Motors gekoppelt ist, um davon angetrieben zu werden.

11. Verfahren nach einem der Ansprüche 1 bis 8, wobei für jedes Paar von erregten Statorspulen (6) die Spulen (6) des Paars auf dem Stator (1) diametral entgegengesetzt sind.

## Revendications

1. Procédé de démarrage d'un moteur à réluctance commutée qui est couplé pour entraîner la roue de compresseur d'un compresseur, moteur à réluctance commutée ayant une pluralité de paires de bobines de stator (6), chaque paire comprenant des bobines (6) qui sont sur des côtés opposés de l'axe de rotation du moteur, le procédé comprenant:
- exciter, en même temps, des première et deuxième paires de bobines de stator (6),
- attendre une période de réduction du mouvement rotatif du rotor (4), puis
- désactiver une première des deux paires de bobines (6), tout en laissant la deuxième paire sous tension de sorte que le rotor (4) est amené à tourner par la deuxième paire de bobines (6),
**caractérisé en ce que**
le procédé comprend en outre l'étape consistant à allumer et éteindre à plusieurs reprises une paire particulière de bobines de stator (6) pour accélérer davantage le moteur, tout en maintenant les autres bobines de stator (6) éteintes.

2. Procédé selon la revendication 1, dans lequel les deux paires de bobines de stator (6) sont les plus proches voisins.

3. Procédé selon l'une quelconque des revendications 1 ou 2, dans lequel pour chaque paire de bobines de stator (6), les bobines (6) sont diamétralement opposées sur le stator (1).

4. Procédé selon l'une quelconque des revendications 1 à 3, dans lequel le procédé comprend en outre une étape consistant à désactiver la seconde paire de bobines (6) après une période de temps particulière.

5. Procédé selon la revendication 4, dans lequel la période de temps particulière est une période prédéterminée pour que le rotor (4) atteigne une position particulière.

6. Procédé selon l'une quelconque des revendications précédentes, dans lequel le procédé comprend une étape consistant à désactiver la seconde paire de bobines de stator (6) lorsqu'une vitesse de rotation prédéterminée du rotor (4) a été atteinte.

7. Procédé selon l'une quelconque des revendications précédentes, dans lequel le procédé comprend en outre l'étape consistant à activer une paire de bobines de stator (6) pour accélérer davantage le moteur.

8. Procédé selon la revendication 7, dans lequel le procédé comprend une autre étape consistant à entraîner le moteur en utilisant une pluralité de paires de ses bobines de stator (6), chaque paire ayant sa propre phase.

9. Circuit de commande d'un moteur à réluctance commuté comprenant:
- des commutateurs (21, 22, 23, 24, 25, 26) pour connecter des bobines de stator (6) du moteur à une alimentation électrique, et
- un contrôleur de démarrage (50) connecté pour actionner les commutateurs (21, 22, 23, 24, 25, 26) pour exécuter les étapes du procédé selon l'une quelconque des revendications 1 à 8.

10. Appareil comprenant:
- un moteur à réluctance commutée, comprenant un rotor (4) et comprenant des bobines de stator (6),
- un circuit de commande selon la revendication 11 connecté selon les revendications aux bobines de stator (6) du moteur,
- un compresseur ayant une roue de compresseur couplée au rotor (4) du moteur devant être entraîné par celui-ci.

11. Procédé selon l'une quelconque des revendications 1 à 8, dans lequel pour chaque paire de bobines de stator (6) sous tension, les bobines (6) de la paire sont diamétralement opposées sur le stator (1).
